# EUROPÄISCHE PATENTSCHRIFT

(11) **EP 2 243 202 B1**
(45) Veröffentlichungstag und Bekanntmachung des Hinweises auf die Patenterteilung: **15.03.2017**
(21) Anmeldenummer: 09706637.7
(22) Anmeldetag: 15.01.2009
(51) Int. Cl.: G02B 26/06, G02B 26/08, H01S 3/06, H01S 3/08, H01S 3/081, H01S 3/105, H01S 3/04, H01S 3/07, H01S 3/094

(54) **FESTKÖRPER-LASER**
SOLID LASER
LASER SOLIDE

(30) Priorität: 28.01.2008 DE 102008008078
(43) Veröffentlichungstag der Anmeldung: 27.10.2010
(73) Patentinhaber: Deutsches Zentrum für Luft- und Raumfahrt e.V., 51147 Köln (DE)
(72) Erfinder: GIESEN, Adolf, 72631 Aichtal (DE); SPINDLER, Gerhard, 79761 Waldshut-Tiengen (DE); HALL, Thomas, 72218 Wildberg (DE); SPEISER, Jochen, 70435 Stuttgart (DE); MENDE, Jens, 70771 Leinfelden-Echterdingen (DE)
(74) Vertreter: Hoeger, Stellrecht & Partner Patentanwälte mbB
(86) Internationale Anmeldenummer: PCT/EP2009/050448
(87) Internationale Veröffentlichungsnummer: WO 2009/095311

(56) Entgegenhaltungen:
- EP-A- 1 566 866
- FR-A- 2 786 938
- US-A- 5 386 427
- US-A1- 2002 172 253
- VOSS A ET AL.: "Intra-cavity beam shaping for high power thin-disk lasers" PROCEEDINGS OF SPIE - THE INTERNATIONAL SOCIETY FOR OPTICAL ENGINEERING - XVI INTERNATIONAL SYMPOSIUM ON GAS FLOW, CHEMICAL LASERS, AND HIGH-POWER LASERS, Bd. 6346, 4. September 2006 (2006-09-04), Seiten 63461U-1-63461U-12, XP009113446
- PAVEL N ET AL: "Positive-branch unstable resonators with thermal lens compensation" OPTICS AND LASER TECHNOLOGY, ELSEVIER SCIENCE PUBLISHERS BV., AMSTERDAM, NL, Bd. 28, Nr. 6, 1. September 1996 (1996-09-01), Seiten 451-455, XP004026281 ISSN: 0030-3992

## Beschreibung

Die Erfindung betrifft einen Festkörper-Laser, insbesondere einen Festkörper-Scheibenlaser, umfassend einen Resonator, welcher ein Resonatorstrahlungsfeld definiert und mindestens eine vom Resonatorstrahlungsfeld durchsetzte Festkörperscheibe.

Derartige Festkörper-Laser sind aus dem Stand der Technik, beispielsweise den europäischen Patentanmeldungen 0 632 551 A, 0 869 591 A, 0 869 592 A, 1 453 157 A bekannt.

Bei diesen besteht das Problem, dass zwar bei geringen optischen Leistungen die thermische Linsenwirkung der Festkörperscheibe nicht ins Gewicht fällt, dass aber bei hohen Leistungen die thermische Linsenwirkung Probleme bereitet.

Festkörperlaser beinhaltend mindestens einen adaptiven Spiegel sind bekannt aus Voss et al., Proceedings of SPIE, vol. 6346 (04.09.2006) 6346U1-12, US-A-2002/0 172 253 und FR-A-2 786 938.

Der Erfindung liegt daher die Aufgabe zugrunde, einen Festkörper-Laser der gattungsgemäßen Art derart zu verbessern, dass die thermische Linsenwirkung zumindest im Wesentlichen kompensiert ist.

Diese Aufgabe wird durch einen Festkörperlaser gemäß dem unabhängigen Anspruch 1 gelöst. Vorteilhafte Ausbildungsformen sind in den abhängigen Ansprüchen definiert.

Diese Aufgabe wird bei einem Festkörper-Laser der eingangs beschriebenen Art erfindungsgemäß dadurch gelöst, dass das Resonatorstrahlungsfeld in Reflexion auf mindestens eine erste adaptive Spiegeleinheit trifft, mit welcher eine Verzerrung des Resonatorstrahlungsfeldes durch eine thermische Linsenwirkung der mindestens einen Festkörperscheibe kompensiert ist.

Der Vorteil der erfindungsgemäßen Lösung besteht darin, dass damit die Möglichkeit besteht, die Verzerrung des Resonatorstrahlungsfeldes aufgrund der thermischen Linsenwirkung im Wesentlichen zu kompensieren oder quasi zu kompensieren und somit die negativen Auswirkungen auf das Resonatorstrahlungsfeld und auf die Strahlqualität zu verweisen.

Mit der ersten adaptiven Spiegeleinheit werden die Verzerrungen des Resonatorstrahlungsfeldes durch die thermische Linsenwirkung von maximal zwei Festkörperscheiben im Wesentlichen kompensiert .

Damit besteht die Möglichkeit, die Zahl der ersten adaptiven Spiegeleinheiten möglichst gering zu halten.

Hinsichtlich der Ausführung der ersten adaptiven Spiegeleinheit sind die unterschiedlichsten Lösungen denkbar.

Eine besonders vorteilhafte Lösung sieht vor, dass die erste adaptive Spiegeleinheit eine thermisch adaptive Spiegeleinheit ist, deren Reflexionsverhalten thermisch einstellbar ist.

Eine derartige thermische Einstellbarkeit des Reflexionsverhaltens ist dabei in unterschiedlichster Art und Weise möglich.

Eine Möglichkeit sieht vor, die thermische Einstellbarkeit aufgrund von Wärmeausdehnungen in der Spiegeleinheit durch Heizwendeln zu realisieren, die beispielsweise elektrisch aufheizbar sind.

Eine andere Möglichkeit besteht darin, die thermisch adaptive Spiegeleinheit derart einzustellen, dass die lokale thermische unterschiedliche Aufheizung durch ein einfallendes Strahlungsfeld, beispielsweise Infrarotstrahlung erfolgt.

Ein derartiges einfallendes Strahlungsfeld kann mit beliebigen Mustern, entsprechend bekannten Möglichkeiten zur Strahlungsfeldformung versehen sein, wobei das Muster einen variierenden Intensitätsverlauf des Strahlungsfeldes bewirkt, so dass beliebige Formen aufgeheizter Bereiche realisierbar sind, die zu entsprechenden beliebigen Formen von thermisch ausgedehnten Materialbereichen und somit vorgewölbten Bereichen der Reflektorfläche führen.

Besonders günstig ist es dabei, wenn mit der ersten adaptiven Spiegeleinheit nichtsphärische Verzerrungen des Resonatorstrahlungsfeldes korrigiert sind.

Eine weitere vorteilhafte Lösung sieht vor, dass in dem Resonatorstrahlungsfeld eine zweite adaptive Spiegeleinheit angeordnet ist, mit welcher durch thermische Linsenwirkung der mindestens einen Festkörperscheibe auftretende Verzerrung des Resonatorstrahlungsfeldes kompensiert sind.

Besonders günstig ist es dabei, wenn mit der zweiten adaptiven Spiegeleinheit die Verzerrungen durch thermische Linsenwirkung von maximal zwei Festkörperscheiben kompensiert sind.

Insbesondere ist es dabei zweckmäßig, wenn mit der zweiten adaptiven Spiegeleinheit sphärische Verzerrungen des Laserstrahlungsfeldes kompensiert sind.

Die zweite adaptive Spiegeleinheit könnte prinzipiell ebenfalls als thermisch adaptive Spiegeleinheit ausgebildet sein.

Besonders einfach lassen sich jedoch sphärische Verzerrungen dann kompensieren, wenn die zweite adaptive Spiegeleinheit als hydrostatisch adaptive Spiegeleinheit ausgebildet ist.

Bei einem derart hydrostatisch ausgebildeten Spiegel ist die Wölbung einer Platte variabel einstellbar, wobei die Wölbung durch einen hydrostatischen Druck eines auf einer Seite der Platte angeordneten Fluids eingestellt wird.

Hinsichtlich der Anordnung der Festkörperscheibe wurden bislang keine näheren Angaben gemacht.

So sieht eine vorteilhafte Lösung vor, dass die Festkörperscheibe auf einem Reflektor angeordnet ist und von dem Resonatorstrahlungsfeld in Reflexion durchsetzt ist.

Besonders günstig ist es dabei, wenn die mindestens einen Festkörperscheibe mit dem Reflektor auf einem Kühlkörper angeordnet ist.

Um eine besondere Kompensation realisieren zu können, ist die mindestens eine Festkörperscheibe mit mindestens einer adaptiven Spiegeleinheit zu einem Verstärkungsmodul zusammengefasst, das als Einheit in dem Resonator positioniert ist.

Ein derartiges Verstärkungsmodul lässt sich somit hinsichtlich der Kompensation optimal einstellen und dann relativ zum Resonator justieren.

Eine besonders günstige Lösung sieht vor, dass die mindestens eine Festkörperscheibe mit einer ersten adaptiven Spiegeleinheit zur Korrektur nichtsphärischer Verzerrungen und einer zweiten adaptiven Spiegeleinheit zur Korrektur sphärischer Verzerrungen zu einem Verstärkungsmodul zusammengefasst ist, wobei dann in jedem Verstärkungsmodul die Verzerrungen des Resonatorstrahlungsfeldes durch die in dem Verstärkungsmodul vorgesehene mindestens eine Festkörperscheibe kompensiert sind.

Besonders zweckmäßig ist es, wenn zwei Festkörperscheiben mit einer ersten adaptiven Spiegeleinheit und einer zweiten adaptiven Spiegeleinheit zu dem Verstärkungsmodul zusammengefasst sind.

Ein erfindungsgemäßer Laser lässt sich besonders vorteilhaft, vorzugsweise für hohe Leistungen, dann aufbauen, wenn das Resonatorstrahlungsfeld mehrere derartige Verstärkungsmodule durchsetzt.

Hinsichtlich der Ausbildung des Resonators wurden bislang keine näheren Angaben gemacht.

So wäre es beispielsweise denkbar, einen stabilen Resonator vorzusehen.

Ein stabiler Resonator hat jedoch Nachteile hinsichtlich der Größe des Aufbaus und hinsichtlich der Auskopplung bei hohen Leistungen, da eine Auskopplung über einen teilreflektierenden Reflektor problematisch ist aufgrund der Erwärmung desselben.

Aus diesem Grund sieht eine vorteilhafte Lösung vor, dass der Resonator als instabiler Resonator ausgebildet ist, da ein instabiler Resonator die Möglichkeit eröffnet, einen radial außen liegenden Teilbereich des Resonatorstrahlungsfeldes durch vollständige Reflektoren oder vollständige Transmission auszukoppeln.

Besonders günstig ist es dabei, wenn der Resonator ein konfokaler instabiler Resonator ist, da dieser besonders vorteilhafte optische Eigenschaften und eine besonders vorteilhafte Kopplung der Moden aufweist.

Ferner ist es, insbesondere im Zusammenhang mit der Festkörperscheibe, von Vorteil, wenn der Resonator rotationssymmetrisch zu einer optischen Achse des Resonatorstrahlungsfeldes ausgebildet ist.

Die Auskopplung erfolgt dabei vorzugsweise dadurch, dass ein bezüglich der optischen Achse radial außenliegender Bereich des Resonatorstrahlungsfeldes aus dem instabilen Resonator auskoppelbar ist.

Vorzugsweise ist dabei der radial außenliegende Bereich in Form eines Kreisringsegmentes bezüglich der optischen Achse ausgebildet.

Dabei könnte das Kreisringsegment lediglich einen geringen Winkelbereich umfassen.

Eine vorteilhafte Lösung sieht vor, dass der Bereich die Form eines sich über ungefähr 180° erstreckenden Kreisringsegments aufweist.

Besonders günstig ist es dabei, wenn das ausgekoppelte Strahlungsfeld durch einen reflektierenden Auskoppelspiegel ausgekoppelt ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels eines erfindungsgemäßen Festkörper-Lasers;
- Fig. 2: eine schematische Schnittansicht durch eine erste adaptive Spiegeleinheit;
- Fig. 3: eine Draufsicht in Richtung des Pfeils A in Fig. 2;
- Fig. 4: einen Schnitt ähnlich Fig. 2 durch ein zweites Ausführungsbeispiel einer ersten adaptiven Spiegeleinheit;
- Fig. 5: eine Draufsicht in Richtung des Pfeils B in Fig. 4;
- Fig. 6: einen Schnitt ähnlich Fig. 2 durch eine zweite adaptive Spiegeleinheit;
- Fig. 7: eine Draufsicht in Richtung des Pfeils C in Fig. 6;
- Fig. 8: eine schematische Darstellung eines zweiten Ausführungsbeispiels eines erfindungsgemäßen Festkörper-Lasers und
- Fig. 9: eine schematische Darstellung eines dritten Ausführungsbeispiels eines erfindungsgemäßen Festkörper-Lasers.

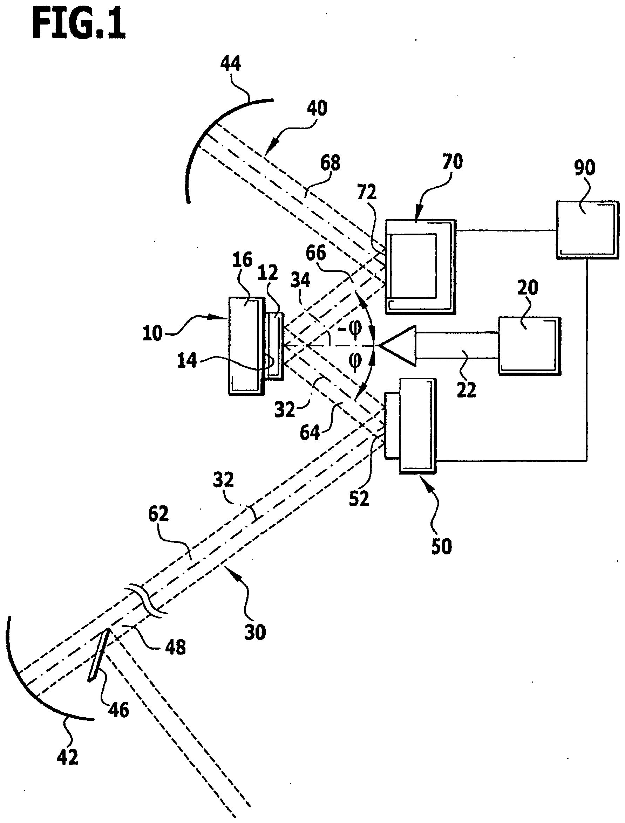

Ein erstes Ausführungsbeispiel eines erfindungsgemäßen Festkörper-Lasers, dargestellt in Fig. 1, umfasst ein als Ganzes mit 10 bezeichnetes Verstärkungselement, welches eine Festkörperscheibe 12 aufweist, die ihrerseits auf einem Reflektor 14, beispielsweise einer Reflektorschicht 14 angeordnet ist, wobei die Reflektorschicht 14 ihrerseits auf einem Kühlkörper 16 angeordnet ist, der wärmeleitend mit der Reflektorschicht 14 verbunden ist. Die Reflektorschicht 14 lässt ihrerseits eine Wärmeleitung zwischen der Festkörperscheibe 12 und dem Kühlelement zu, so dass die Festkörperscheibe 12 flächig gekühlt ist.

Eine derartige Verstärkungseinheit 10 ist ausführlich beispielsweise in den europäischen Patentanmeldungen 0 632 551 A, 0 869 591 A, 0 869 592 A, 1 453 157 A beschrieben.

Die Festkörperscheibe 12 stellt ein laseraktives Medium dar, vorzugsweise ein Material, welches ebenfalls beispielsweise in den europäischen Patentanmeldungen 0 632 551 A, 0 869 591 A, 0 869 592 A, 1 453 157 A beschrieben ist.

Das laseraktive Medium in der Festkörperscheibe 12 wird vorzugsweise angeregt durch aus einer Pumplichtquelle 20 austretendes Pumplicht, welches als Pumplichtstrahlungsfeld 22 auf der Festkörperscheibe 12, und zwar von einer der Reflektorschicht 14 gegenüberliegenden Seite auftrifft und in die Festkörperscheibe 12 eindringt und dadurch das laseraktive Material optisch anregt, wobei vorzugsweise die Reflektorschicht 14 noch gleichzeitig eine Reflexion des Pumplichtstrahlungsfelds 22 bewirkt, so dass ein Mehrfachdurchtritt des Pumplichtstrahlungsfeldes 22 durch die Festkörperscheibe vorliegt und somit eine verbesserte optische Anregung derselben, wobei der Mehrfachdurchtritt des Pumplichtstrahlungsfeldes 22 nicht auf einen zweifachen Mehrfachdurchtritt begrenzt ist, sondern eine höhere Zahl von Durchtritten aufweisen kann, wobei hierzu eine geeignete Führung des Pumpstrahlungsfeldes 22 erforderlich ist, die ebenfalls in der europäischen Patentanmeldung 0 632 551 A, 0 869 591 A, 0 869 592 A, 1 453 157 A beschrieben ist.

Auf eine derartige Verstärkungseinheit 10 trifft ein Resonatorstrahlungsfeld 30, welches vorzugsweise rotationssymmetrisch zu einer optischen Achse 32 ausgebildet ist, so dass die optische Achse 32 in einem spitzen Winkel ϕ relativ zu einer Normalen 34 auf der Festkörperscheibe 12 auf diese auftrifft, in die Festkörperscheibe 12 eindringt und durch die Reflektorschicht 14 reflektiert wird, und das Resonatorstrahlungsfeld 30 wiederum mit einem Verlauf der optischen Achse 32 im Winkel -ϕ zur Normalen 34 aus der Festkörperscheibe 12 austritt.

Das Resonatorstrahlungsfeld 30 wird dabei definiert durch einen Resonator 40 mit Resonatorspiegeln 42 und 44, wobei der Resonator 40 als instabiler Resonator ausgebildet ist und somit die Resonatorspiegel 42 konkave Spiegel darstellen.

Vorzugsweise ist der instabile Resonator 40 als konfokaler instabiler Resonator 40 ausgeführt.

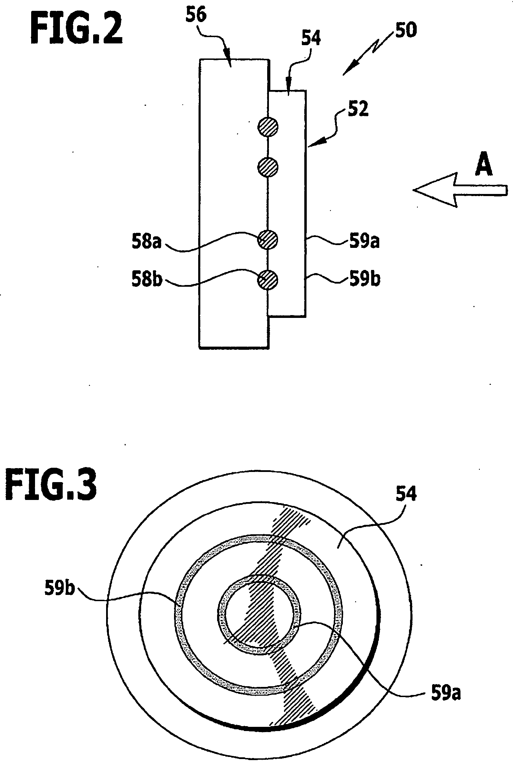

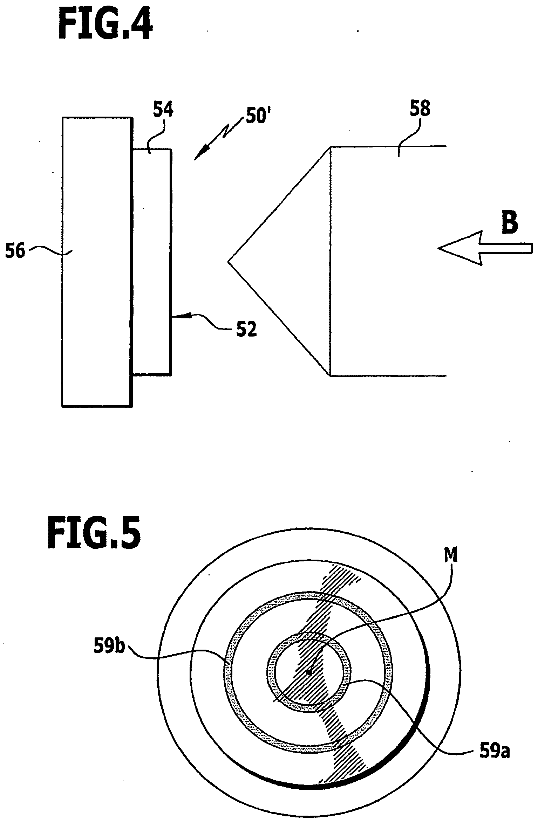

Bei diesem konfokalen Resonator 40 ist entweder einer der Resonatorspiegel 42 und 44 als das Resonatorstrahlungsfeld 30 in einem ein Kreisringsegment darstellenden äußeren Teilbereich 48 nicht reflektierender sondern für dieses durchlässiger Teilspiegel ausgeführt, wie beispielsweise in der europäischen Patentanmeldung EP 1 566 866 im Zusammenhang mit Fig. 1 und 2 beschrieben, oder es ist ein sogenannter Scraper Spiegel 46 vorgesehen, welcher, wie ebenfalls in der europäischen Patentanmeldung 1 566 866 im Zusammenhang mit Fig. 3 und 4 beschrieben, das Kreisringsegment als äußeren Teilbereich 48 bezüglich der optischen Achse 32 aus dem instabilen Resonator 40 auskoppelt.

Der scheibenförmige Festkörper 12 erzeugt, wie in den europäischen Patentanmeldungen 0 632 551 A, 0 869 591 A, 0 869 592 A, 1 453 157 A beschrieben, vorzugsweise nur eine geringe thermische Linse, die bei geringen Leistungen zu einer geringfügigen Verzerrung des Resonatorstrahlungsfeldes 30 führt, jedoch bei hohen optischen Leistungen relevant ist.

Zur Kompensation von derartigen Verzerrungen ist unmittelbar auf die Verstärkereinheit 10 folgend eine erste adaptive Spiegeleinheit 50 vorgesehen, welche eine hochreflektierende Beschichtung 52 trägt, die einen zum Resonatorspiegel 42 führenden Ast 62 des Resonatorstrahlungsfeldes 30 reflektiert und in Reflexion mit einem Ast 64 des Resonatorstrahlungsfeldes koppelt, der mit der optischen Achse 32 im Winkel ϕ zur Normalen 34 in die Festkörperscheibe 12 einfällt und an der Reflektorschicht 14 reflektiert wird unter Erzeugung eines mit diesem gekoppelten ausfallenden Astes 66, der auf eine zweite adaptive Spiegeleinheit 70 mit einer hochreflektierenden Beschichtung 72 fällt, wobei die hochreflektierende Beschichtung 72 den Ast 66 des Resonatorstrahlungsfeldes 30 mit einem Ast 68 des Resonatorstrahlungsfeldes 30 koppelt, der beispielsweise auf den Resonatorspiegel 44 auftrifft.

Mit den beiden adaptiven Spiegeleinheiten 50 und 70 besteht somit die Möglichkeit, Verzerrungen des Resonatorstrahlungsfeldes 30 zu kompensieren, die durch eine sich in der Festkörperscheibe 12 ausbildende thermische Linse entstehen.

Besonders vorteilhaft für eine Kompensation der Verzerrungen des Resonatorstrahlungsfeldes 30 ist es, wenn die Länge der Äste 64 und 66 zwischen den adaptiven Spiegeleinheiten 50, 70 möglichst klein ist gegenüber dem Ast 62 zwischen dem Resonatorspiegel 42, nahe welchem die Auskopplung des Bereichs 48 des Resonatorstrahlungsfeldes erfolgt, und der nächstliegenden adaptiven Spiegeleinheit 50 oder der Verstärkungseinheit 10.

Vorzugsweise sind die Äste 64, 66 des Resonatorstrahlungsfeldes 30 um einen Faktor von mehr als drei, besser einem Faktor mehr als fünf und noch besser einen Faktor mehr als zehn kürzer als der Ast 62.

Ferner sind zweckmäßigerweise die Verstärkungseinheit 10 und die adaptiven Spiegeleinheiten 50, 70 nahe dem Resonatorspiegel 44, an welchem keine Auskopplung erfolgt, angeordnet, so dass der Ast 68 zwischen diesem Resonatorspiegel 44 und der nächstliegenden adaptiven Spiegeleinheit 70 oder der Verstärkereinheit wesentlich kürzer als der Ast 62 des Resonatorstrahlungsfeldes ist.

Beispielsweise umfasst die erste adaptive Spiegeleinheit 50 eine die hochreflektierende Beschichtung 52 tragende Platte aus einem sich thermisch ausdehnenden Material, beispielsweise eine Glasplatte 54, die auf einem gekühlten Träger 56 angeordnet ist, wobei die Glasplatte 54 durch zu einem Mittelpunkt M ringförmige Heizelemente 58a und 58b aufheizbar ist, wobei dadurch ringförmige aufgeheizte Bereiche 59a und 59b in der Platte 54 entstehen, die im thermischen Gleichgewichtszustand aufgrund der thermischen Ausdehnung des Materials eine Vorwölbung der Platte 54 in diesen Bereichen 59a und 59b zur Folge haben, so dass die hochreflektierende Beschichtung 52 in diesen Bereichen 59a und 59b von einer ebenen Form abweicht und beispielsweise in den zum Mittelpunkt M ringförmigen Bereichen 59a und 59b gegenüber der übrigen Fläche erhaben ist. Mit diesen vorgewölbten reflektierenden Bereichen 59a und 59b besteht die Möglichkeit, nichtsphärische Verzerrungen des Resonatorstrahlungsfeldes 30 zu kompensieren.

Alternativ zur ersten adaptiven Spiegeleinheit 50 sieht ein weiteres Ausführungsbeispiel einer ersten adaptiven Spiegeleinheit 50' ebenfalls eine Platte 54 mit einer hochreflektierenden Beschichtung 52 vor, die auf dem gekühlten Träger 56 angeordnet ist. Allerdings erfolgt eine lokal variierende Erwärmung der Platte 54 in den Bereichen 59a und 59b, um diese erhaben auszuführen, durch ein Strahlungsfeld 58, welches eine derartige Wellenlänge, beispielsweise im Infraroten, aufweist, dass diese die hochreflektierende Beschichtung 52 für das Resonatorstrahlungsfeld 30 durchsetzen kann und von der Platte 54 im Innern derselben absorbiert wird, wobei das Strahlungsfeld 58 lokale Intensitätsvariationen aufweist, so dass eine lokal unterschiedliche Aufheizung der Platte 54 beispielsweise ebenfalls in den Bereichen 59a und 59b, und zwar vorzugsweise ringförmig, erfolgt, so dass sich die hochreflektierende Beschichtung in den Bereichen 59a und 59b in gleicher Weise abweichend von einer ebenen Fläche verhält und somit ebenfalls dazu dient, nichtsphärische Verzerrungen des Resonatorstrahlungsfeldes 30, ausgelöst durch die Festkörperscheibe 12, zu kompensieren.

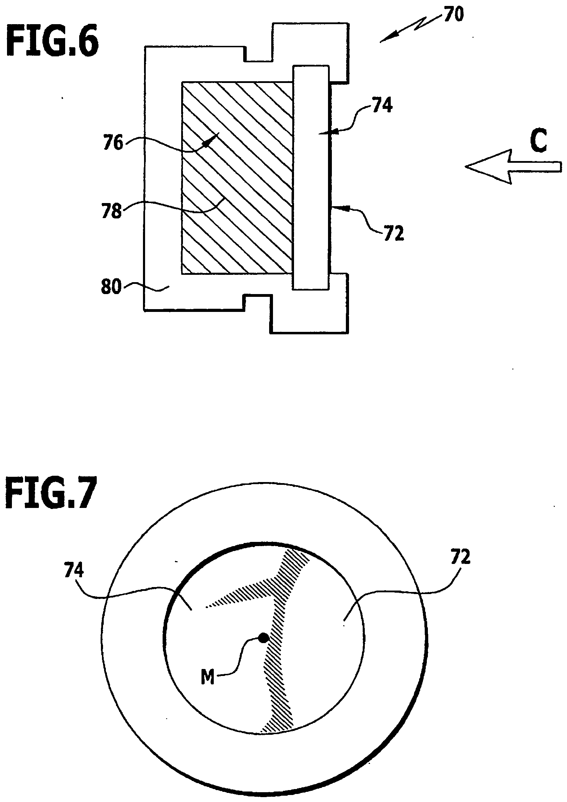

Die zweite adaptive Spiegeleinheit 70 ist, wie in Fig. 6 und 7 dargestellt, ebenfalls mit einer hochreflektierenden Beschichtung 72 versehen, die auf einer Platte 74, beispielsweise ebenfalls einer Glasplatte, angeordnet ist, wobei die Platte 74 ein Volumen 76 abschließt, in welchem ein Fluid 78 vorhanden ist. Beispielsweise ist das Volumen 76 begrenzt durch ein Gehäuse 80, in dem die Platte 74 gehalten ist und das sich auf einer Seite der Platte 74 erstreckt. Durch Druckänderung des Fluids 78 besteht die Möglichkeit, die Platte 74 zu wölben konkav oder konvex, so dass die hochreflektierende Beschichtung 72 sich dadurch in einer entweder geringfügig konvexen oder geringfügig konkaven Fläche, vorzugsweise ebenfalls rotationssymmetrisch zu einem Mittelpunkt M erstreckt, und dadurch die Möglichkeit eröffnet, sphärische Verzerrungen des Resonatorstrahlungsfeldes 30 zu korrigieren.

Darüber hinaus hat eine derartige zweite adaptive Spiegeleinheit 70 den Vorteil, dass Korrekturen in einem größeren Maß möglich sind, als mit den ersten adaptiven Spiegeleinheiten 50 oder 50', allerdings lediglich insoweit als diese Korrekturen zu sphärischen Verzerrungen des Resonatorstrahlungsfeldes 30 führen.

Bei dem ersten Ausführungsbeispiel des erfindungsgemäßen Festkörpers gemäß Fig. 1 besteht somit die Möglichkeit, einerseits mit der ersten adaptiven Spiegeleinheit 50 nichtsphärische Verzerrungen des Resonatorstrahlungsfeldes 30 zu kompensieren und andererseits mit der zweiten adaptiven Spiegeleinheit 70 sphärische Verzerrungen des Resonatorstrahlungsfeldes 30 zu kompensieren.

Sowohl die erste adaptive Spiegeleinheit 50 als auch die zweite adaptive Spiegeleinheit 70 sind durch eine als Ganzes mit 90 bezeichnete Steuerung ansteuerbar, wobei mit der Steuerung 90 das Maß der Kompensation der Verzerrungen des Resonatorstrahlungsfeldes 30 steuerbar ist, die von der Leistung des Resonatorstrahlungsfeldes 30 abhängig sind, so dass in Anpassung an die Leistung des Resonatorstrahlungsfeldes 30 jeweils die Verzerrungen, ausgelöst durch die thermische Linsenwirkung in der Festkörperscheibe 12, zumindest im Wesentlichen, vorzugsweise gänzlich, korrigierbar sind und somit überhaupt die Möglichkeit besteht, die Verstärkereinheit 10 mit der Festkörperscheibe 12, die eine thermische Linsenwirkung entfaltet, in dem instabilen Resonator 40 einzusetzen und die Vorteile des instabilen Resonators 40 auszunutzen, die darin bestehen, dass dieser äußerst kompakt baut und dass insbesondere bei hohen Leistungen eine vorteilhafte Auskopplung durch den Auskoppelspiegel 46 oder durch einen partiellen Resonatorspiegel 42 möglich ist, der lediglich ein Teilsegment 48 des Resonatorstrahlungsfeldes 30 auskoppelt, für dieses aber entweder vollständig durchlässig ist oder dieses vollständig reflektiert, so dass die Probleme, die mit teildurchlässigen Spiegeln bei stabilen Resonatoren auftreten, vermieden werden können.

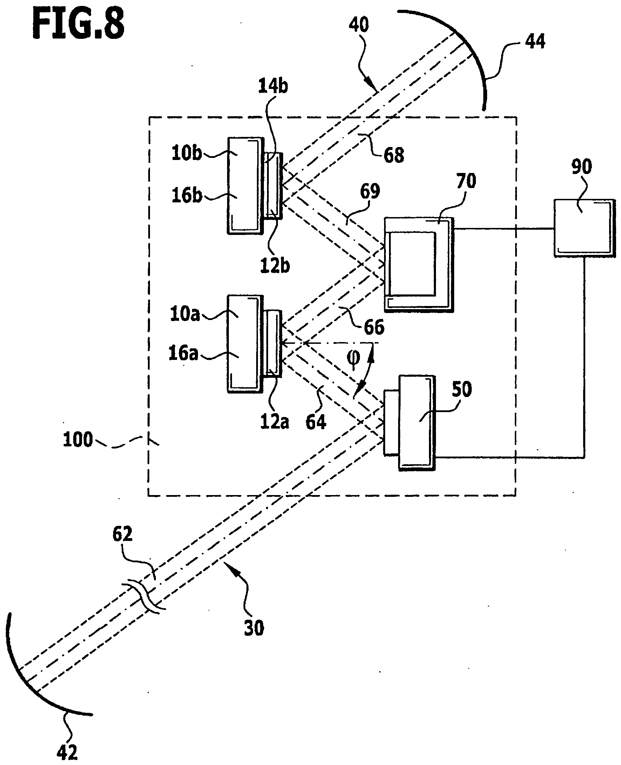

Bei einem zweiten Ausführungsbeispiel eines erfindungsgemäßen Festkörperlasers, dargestellt in Fig. 8, sind in dem Resonatorstrahlungsfeld 30 des instabilen Resonators 44 zwei Verstärkungseinheiten 10a und 10b vorgesehen, denen eine erste adaptive Spiegeleinheit 50 und eine zweite adaptive Spiegeleinheit 70 zugeordnet sind, wobei beispielsweise die erste adaptive Spiegeleinheit 50 so angeordnet ist, dass sie in gleicher Weise wie beim ersten Ausführungsbeispiel den Ast 62 des Resonatorstrahlungsfeldes 30 mit dem Ast 64 koppelt, der dann auf die Festkörperscheibe 12a einfällt, während die zweite adaptive Spiegeleinheit 70 den Ast 66 mit dem Ast 69 des Resonatorstrahlungsfeldes 30 koppelt, wobei der Ast 69 dann in die Festkörperscheibe 12b einfällt, deren Reflektorschicht 14b den Ast 69 mit dem Ast 68 des Resonatorstrahlungsfeldes 30 koppelt, der dann seinerseits beispielsweise auf den Resonatorspiegel 44 auftrifft.

Bei diesem Ausführungsbeispiel steuert die Steuerung 90 die erste adaptive Spiegeleinheit 50 sowie die zweite adaptive Spiegeleinheit 70 derart an, dass diese beiden gemeinsam die Verzerrungen des Resonatorstrahlungsfeldes 30 im Wesentlichen kompensieren, die durch die thermischen Linsenwirkungen der Festkörperscheiben 12a und 12b erzeugt werden, so dass die thermischen Linsenwirkungen zweier Festkörperscheiben 12a und 12b durch zwei adaptive Spiegeleinheiten, nämlich die erste adaptive Spiegeleinheit 50 und die zweite adaptive Spiegeleinheit 70 insgesamt kompensierbar sind.

Damit sind auch bei Vorsehen nur zweier adaptiver Spiegeleinheiten 50 und 70 zwei Verstärkungseinheiten 10a und 10b mit Festkörperscheiben 12a und 12b in dem instabilen Resonator 40 einsetzbar.

Vorzugsweise sind die adaptiven Spiegeleinheiten 50 und 70 sowie die Verstärkungseinheiten 10a und 10b zu einem kompensierten Verstärkungsmodul 100 zusammengefasst, das aufgrund der Kompensation der thermischen Linsenwirkungen sich verzerrungsfrei auf das Resonatorstrahlungsfeld 30 auswirkt.

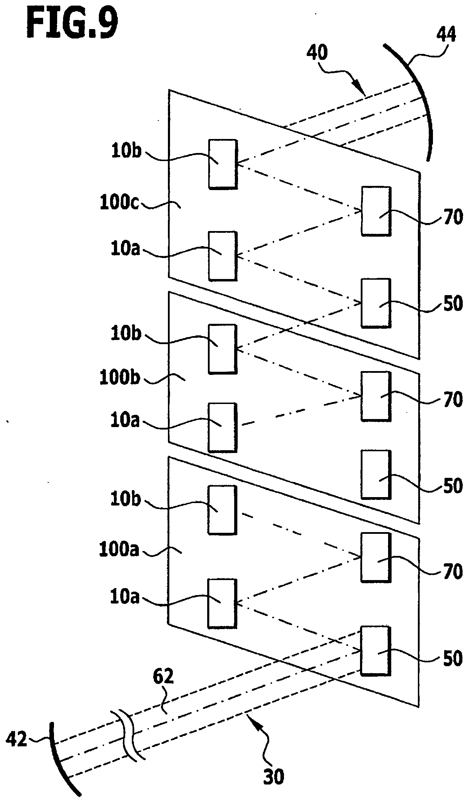

Bei einem dritten Ausführungsbeispiel, dargestellt in Fig. 9 sind in dem Resonatorstrahlungsfeld 30 mehrere derartiger, im zweiten Ausführungsbeispiels gemäß Fig. 8 beschriebener Verstärkungsmodule 100, nämlich die Verstärkungsmodule 100a, 100b und 100c vorgesehen, die sich insgesamt verzerrungsneutral auf das Resonatorstrahlungsfeld 30 auswirken, so dass die Zahl der Verstärkungsmodule 100 in dem Resonatorstrahlungsfeld 30 erhöht werden kann ohne dass das Resonatorstrahlungsfeld 30 derart große Verzerrungen erleidet, dass das Resonatorstrahlungsfeld 30 nicht mehr ein durch den instabilen Resonator 40 mit den Resonatorspiegeln 42 und 44 definiert werden kann.

Damit besteht die Möglichkeit, die Leistung des Festkörperlasers gemäß dem dritten Ausführungsbeispiel gemäß dem ersten oder zweiten Ausführungsbeispiel skalierbar zu steigern, ohne dass sich die thermischen Linsenwirkungen der Festkörperscheiben 12 negativ auf das Resonatorstrahlungsfeld 30 auswirken.

Besonders günstig ist es, wenn die Verstärkungsmodule 100 nahe dem Resonatorspiegel 44 angeordnet sind, an welchem keine Auskopplung des Resonatorstrahlungsfeldes 30 erfolgt, so dass der Ast 62 wesentlich länger ist als die Äste 64, 66, 69 und 68, vorzugsweise um mehr als einen Faktor drei, besser mehr als einen Faktor fünf und noch besser mehr als einen Faktor zehn länger ist.

## Patentansprüche

1. Festkörper-Laser, insbesondere Festkörper-Scheibenlaser, umfassend einen Resonator, welcher ein Resonatorstrahlungsfeld (30) definiert und mindestens eine vom Resonatorstrahlungsfeld (30) durchsetzte Festkörperscheibe (12), wobei das Resonatorstrahlungsfeld (30) in Reflexion auf mindestens eine erste adaptive Spiegeleinheit (50) trifft, mit welcher eine Verzerrung des Resonatorstrahlungsfeldes (30) durch eine thermische Linsenwirkung von maximal zwei Festkörperscheiben (12) im Wesentlichen kompensiert wird, und wobei die maximal zwei Festkörperscheiben (12) mit mindestens der ersten adaptiven Spiegeleinheit (50, 70) zu einem Verstärkungsmodul (100) zusammengefasst sind, das als Einheit im Resonator (40) positioniert ist und dass das Resonatorstrahlungsfeld (30) mehrere derartige Verstärkungsmodule (100) durchsetzt.

2. Festkörper-Laser nach einem der voranstehenden Ansprüche, **dadurch gekennzeichnet, dass** mit der ersten adaptiven Spiegeleinheit (50) nichtsphärische Verzerrungen des Resonatorstrahlungsfeldes (30) korrigiert sind.

3. Festkörper-Laser nach einem der voranstehenden Ansprüche, **dadurch gekennzeichnet, dass** in dem Resonatorstrahlungsfeld (30) eine zweite adaptive Spiegeleinheit (70) vorgesehen ist, mit welcher durch thermische Linsenwirkung der mindestens einen Festkörperscheibe (12) auftretende Verzerrungen des Resonatorstrahlungsfeldes (30) kompensiert sind.

4. Festkörper-Laser nach Anspruch 3, **dadurch gekennzeichnet, dass** mit der zweiten adaptiven Spiegeleinheit (70) die Verzerrungen durch thermische Linsenwirkung von maximal zwei Festkörperscheiben (12) kompensiert sind.

5. Festkörper-Laser nach Anspruch 3 oder 4, **dadurch gekennzeichnet, dass** mit der zweiten adaptiven Spiegeleinheit (70) sphärische Verzerrungen des Laserstrahlungsfeldes (30) kompensiert sind.

6. Festkörper-Laser nach einem der voranstehenden Ansprüche, **dadurch gekennzeichnet, dass** die mindestens eine Festkörperscheibe (12) auf einem Reflektor (14) angeordnet ist und von dem Resonatorstrahlungsfeld (30) in Reflexion durchsetzt ist.

7. Festkörper-Laser nach einem der voranstehenden Ansprüche, **dadurch gekennzeichnet, dass** die mindestens eine Festkörperscheibe (12) mit einer ersten adaptiven Spiegeleinheit (50) zur Korrektur nichtsphärischer Verzerrungen und einer zweiten adaptiven Spiegeleinheit (70) zur Korrektur sphärischer Verzerrungen zu einem Verstärkungsmodul (100) zusammengefasst ist.

8. Festkörper-Laser nach Anspruch 7, **dadurch gekennzeichnet, dass** zwei Festkörperscheiben (12) mit einer ersten adaptiven Spiegeleinheit (50) und einer zweiten adaptiven Spiegeleinheit (70) zu dem Verstärkungsmodul (100) zusammengefasst ist.

9. Festkörper-Laser nach einem der voranstehenden Ansprüche, **dadurch gekennzeichnet, dass** der Resonator (40) mit einen optischen Achse und als instabiler Resonator ausgebildet ist.

10. Festkörper-Laser nach Anspruch 9, **dadurch gekennzeichnet, dass** der Resonator (40) ein konfokaler instabiler Resonator ist.

11. Festkörper-Laser nach Anspruch 10, **dadurch gekennzeichnet, dass** der Resonator (40) rotationssymmetrisch zu einer optischen Achse (32) des Resonatorstrahlungsfelds (40) ausgebildet ist.

12. Festkörper-Laser nach einem der Ansprüche 9 bis 11, **dadurch gekennzeichnet, dass** ein bezüglich der optischen Achse (32) radial außenliegender Bereich (48) des Resonatorstrahlungsfeldes (30) aus dem instabilen Resonator (40) ausgekoppelt ist.

13. Festkörper-Laser nach Anspruch 12, **dadurch gekennzeichnet, dass** der Bereich die Form eines Kreisringsegments (48) bezüglich der optischen Achse aufweist.

## Claims

1. Solid-state laser, in particular a solid-state disc laser, comprising a resonator that defines a resonator radiation field (30) and at least one solid-state disc (12) with the resonator radiation field (30) passing through it, wherein, in reflection, the resonator radiation field (30) strikes at least one first adaptive mirror unit (50), with which a distortion of the resonator radiation field (30) as a result of a thermal lens effect of a maximum of two solid-state discs (12) is substantially compensated, and wherein the maximum of two solid-state discs (12) are combined with at least the first adaptive mirror unit (50, 70) to form an amplification module (100), which is positioned in the resonator (40) as a unit, and in that the resonator radiation field (30) passes through a plurality of such amplification modules (100).

2. Solid-state laser according to one of the preceding claims, **characterised in that** non-spherical distortions of the resonator radiation field (30) are corrected with the first adaptive mirror unit (50).

3. Solid-state laser according to one of the preceding claims, **characterised in that** there is provided in the resonator radiation field (30) a second adaptive mirror unit (70), with which there are compensated distortions of the resonator radiation field (30) occurring as a result of thermal lens effect of the at least one solid-state disc (12).

4. Solid-state laser according to claim 3, **characterised in that** the distortions as a result of thermal lens effect of a maximum of two solid-state discs (12) are compensated with the second adaptive mirror unit (70).

5. Solid-state laser according to claim 3 or 4, **characterised in that** spherical distortions of the laser radiation field (30) are compensated with the second adaptive mirror unit (70).

6. Solid-state laser according to one of the preceding claims, **characterised in that** the at least one solid-state disc (12) is arranged on a reflector (14) and, in reflection, has the resonator radiation field (30) passing through it.

7. Solid-state laser according to one of the preceding claims, **characterised in that** the at least one solid-state disc (12) is combined with a first adaptive mirror unit (50) for the correction of non-spherical distortions and with a second adaptive mirror unit (70) for the correction of spherical distortions to form an amplification module (100).

8. Solid-state laser according to claim 7, **characterised in that** two solid-state discs (12) are combined with a first adaptive mirror unit (50) and with a second adaptive mirror unit (70) to form an amplification unit (100).

9. Solid-state laser according to one of the preceding claims, **characterised in that** the resonator (40) is configured with an optical axis and as an unstable resonator.

10. Solid-state laser according to claim 9, **characterised in that** the resonator (40) is a confocal unstable resonator.

11. Solid-state laser according to claim 10, **characterised in that** the resonator (40) is configured rotationally symmetrically to an optical axis (32) of the resonator radiation field (40).

12. Solid-state laser according to one of claims 9 to 11, **characterised in that** a region (48) of the resonator radiation field (30) located radially outwardly in relation to the optical axis (32) is decoupled from the unstable resonator (40).

13. Solid-state laser according to claim 12, **characterised in that** the region has the shape of a segment (48) of a circular ring in relation to the optical axis.

## Revendications

1. Laser à solide, en particulier laser à disque solide, comprenant un résonateur, qui définit un champ de rayonnement (30) du résonateur et au moins un disque solide (12) traversé par le champ de rayonnement (30) du résonateur, dans lequel le champ de rayonnement (30) du résonateur en réflexion touche au moins une première unité de miroir adaptative (50), avec laquelle une distorsion du champ de rayonnement (30) du résonateur par un effet de lentille thermique au maximum de deux disques solides (12) est sensiblement compensée , et dans lequel les au maximum deux disques solides (12) sont regroupés avec au moins la première unité de miroir adaptatif (50, 70) en un module d'amplification (100), qui est positionné d'un seul tenant dans le résonateur (40), et le champ de rayonnement (30) du résonateur traverse plusieurs modules d'amplification (100) de ce type.

2. Laser solide selon l'une quelconque des revendications précédentes, **caractérisé en ce que** des distorsions non sphériques du champ de rayonnement (30) du résonateur sont corrigées avec la première unité de miroir adaptative (50).

3. Laser solide selon l'une quelconque des revendications précédentes, **caractérisé en ce qu'**il est prévu dans le champ de rayonnement (30) du résonateur une deuxième unité de miroir adaptative (70) avec laquelle des distorsions du champ de rayonnement (30) du résonateur dues à l'effet de lentille thermique du au moins un disque solide (12) sont compensées.

4. Laser solide selon la revendication 3, **caractérisé en ce que** les distorsions par effet de lentille thermique au maximum de deux disques solides (12) sont compensées par la seconde unité de miroir adaptative (70).

5. Laser solide selon la revendication 3 ou 4, **caractérisé en ce que** des distorsions sphériques du champ de rayonnement (30) du laser sont compensées par la seconde unité de miroir adaptative (70).

6. Laser solide selon l'une quelconque des revendications précédentes, **caractérisé en ce que** le au moins un disque solide (12) est agencé sur un réflecteur (14) et est traversé en réflexion par le champ de rayonnement (30) du résonateur.

7. Laser solide selon l'une quelconque des revendications précédentes, **caractérisé en ce que** le au moins un disque solide (12) est regroupé avec une première unité de miroir adaptative (50) pour corriger les distorsions non sphériques et une seconde unité de miroir adaptative (70) pour corriger les distorsions sphériques en un module d'amplification (100).

8. Laser solide selon la revendication 7, **caractérisé en ce que** deux disques solides (12) sont regroupés avec une première unité de miroir adaptative (50) et une seconde unité de miroir adaptative (70) en module d'amplification (100).

9. Laser solide selon l'une quelconque des revendications précédentes, **caractérisé en ce que** le résonateur (40) est réalisé avec un axe optique et sous la forme d'un résonateur instable.

10. Laser solide selon la revendication 9, **caractérisé en ce que** le résonateur (40) est un résonateur instable à foyer commun.

11. Laser solide selon la revendication 10, **caractérisé en ce que** le résonateur (40) est réalisé de manière symétrique en rotation par rapport à un axe optique (32) du champ de rayonnement (40) du résonateur.

12. Laser solide selon l'une quelconque des revendications 9 à 11, **caractérisé en ce qu'**une zone (48) du champ de rayonnement (30) du résonateur radialement située à l'extérieur par rapport à l'axe optique (32) est désaccouplée du résonateur (40) instable.

13. Laser solide selon la revendication 12, **caractérisé en ce que** la zone présente la forme d'un segment d'anneau de cercle (48) par rapport à l'axe optique.
